# EUROPEAN PATENT APPLICATION

(11) **EP 1 656 867 A1**
(43) Date of publication of application: **17.05.2006**
(21) Application number: 04380224.8
(22) Date of filing: 10.11.2004
(51) Int. Cl.: A47J 43/07

(54) **Accessory for hand blender**

(71) Applicant: Electrodomesticos Taurus S.L., 25790 Oliana (Lleida) (ES)
(72) Inventor: Codina Vilana, Antonio, 25790 Oliana (Lleida-Spain) (ES); Trench Roca, Lluis, 25790 Oliana (Lleida-Spain) (ES)
(74) Representative: Manresa Val, Manuel

(57) **Abstract**

It is of the type that is fitted and used in the inner part of a container or watertight or hermetic container to cut or to mix food products, that comprises a spin central axis (1), with at least one blade (2) or paddle, fixed to the referred spin central axis and a superior support or hook (3) for the fit or the union to the power unit of hand blender that characterizes in that it forms an extractable set formed by an extractable base fitted to the lower part of the central axis by fixation means that allow the free turn or spin of the central axis with respect to the base.

## Description

Accessory for hand blender of the type that is fitted and used in the inner part of a container or watertight or hermetic container to cut or to mix food products, that comprises a spin central axis, with at least one blade or paddle, fixed to the referred spin central axis and a superior support or hook for the fit or the union to the power unit of hand blender that is characterized in that it forms an extractable set formed by an extractable base fitted to the lower part of the central axis by fixation means that allow the free turn or spin of the central axis with respect to the base.

### BACKGROUNDS OF THE INVENTION

It is known in the state of the art different patents that refer to accessories for hand blenders.

The firm TAURUS, S.A. is the owner of the Spanish Patent n° 8601804 (ES2005071) that consists of improvements in the cut tools for hand blenders that have a laminar blade joined to a connection socket to a spin axis of a hand blender, composed of a flat nucleus from which cutting paddles are derived radially, preferably in the number of two and in equidistance, with a different inclination each other, and other axial paddles, located in the spaces between the radial paddles and in cylindrical disposition. The radial paddles are flat and in curvature with convex outer sharpened edge and the axial paddles have their sharpened outer edge and with slight inclination.

It is also known the European Patent n° 1127526 in the name of the German firm BRAUN GMBH that refers to a device for chopping food, in particular ice cubes, which includes a container body subdivided into an upper processing zone and a lower collecting zone. The rotary chopping tool received in the processing zone serves to comminute the food materials. A sieve is provided in the transition region from the processing zone to the collecting zone. The device of the invention has the advantage of enabling both foodstuffs and ice cubes to be reduced to defined sizes readily. In addition, ice cubes may be reduced without major amounts of energy being absorbed by the chopping tool and without the reduced parts beginning to melt.

Finally, the applicant is the owner of the Spanish Patent n° 9602285 (ES2114830) that refers to a multiple reducer accessory for rod-type electric mixer, for special application to rod-type electric mixers in which the latter can be uncoupled from the drive unit, comprises, in an upper part, a coupling arrangement for coupling to the drive unit of the electric mixer and, in another, lower part, comprises a multiple reducer arrangement which allows a variety of work tools to be actuated at different speeds and/or in different directions of rotation and the closing off of the access opening of an appended work container for one of the tools. This accessory applies to domestic culinary equipment.

### BRIEF DESCRIPTION OF THE INVENTION

The present invention refers to an accessory for household-electric appliance of the type hand blenders that is characterized because it does not need a pivot or fixed support in the container where the foods are mixed or cut up, so that the central axis, where the blades or paddles are fixed, turns in the inner part of the container.

The inventors have observed that one of the greatest disadvantages that nowadays the accessories for household-electric appliances have, is that once products are cut up and/or mixed in the interior of the container, these (the containers) cannot be introduced in the microwaves, because they have an axis or metallic or extension parts, mainly located in its base in order to facilitate the spin of the central axis where the blades or paddles are fixed.

Thus, the inventors have developed a new accessory that has an extractable base fixed to a central axis, in such a way that it does not need the fixed metallic axis in the container, reason why can be used said container, once the set axis-blade-base is removed, to preserve and to warm meals, for example in a microwaves oven.

It is necessary to emphasize that this way also makes easier the processes of manufacture of the containers, manufacturing them much more economically, and reducing the final price of the household-electric appliance, being much easier to be recycled.

It is an object of the present invention an Accessory for hand blender of the type that is fitted and used in the inner part of a container or watertight or hermetic container to cut or to mix food products, that comprises a spin central axis, with at least one blade or paddle, fixed to the referred spin central axis and a superior support or hook for the fit or the union to the power unit of hand blender that is characterized in that it forms an extractable set formed by an extractable base fitted to the lower part of the central axis by fixation means that allow the free turn or spin of the central axis with respect to the base.

It is an additional object of the present invention that the referred extractable base has a shape identical or similar to the shape of the bottom of the container.

It is another additional object of the present invention that the fixation means consist of a thread as a lower extension of the mentioned central axis and a fixation cap with a cast with screwthreads for the threading of the mentioned thread.

It is another additional object of the present invention that the mentioned fixation means are at least a projection or clip system, incorporated in the lower end of the central axis and that it is joined by the pressure to a fixation cap, that has at least a housing adapted for the fit of said projection, that is at least one.

It is another additional object of the present invention that in lower part of said base, lateral flaps are located, as a foot, and whose height of said flaps is equal or higher than the height of the fixation means.

### BRIEF DESCRIPTION OF THE DRAWINGS

With the purpose to facilitate the explanation five sheets of drawings are attached to the present description, in which a practical case of an embodiment has been reproduced, which is mentioned only for exemplificative, non limitative of the scope of the present invention:
- figure 1 shows a perspective view from up of the object of the present invention,
- figure 2 shows an upper view of the figure 1,
- figure 3 is an exploded view of the figure 1,
- figure 4 is a lateral view of another model of the accessory, and
- figure 5 is an exploded view of figure 4.

### DETAILED DESCRIPTION OF THE INVENTION

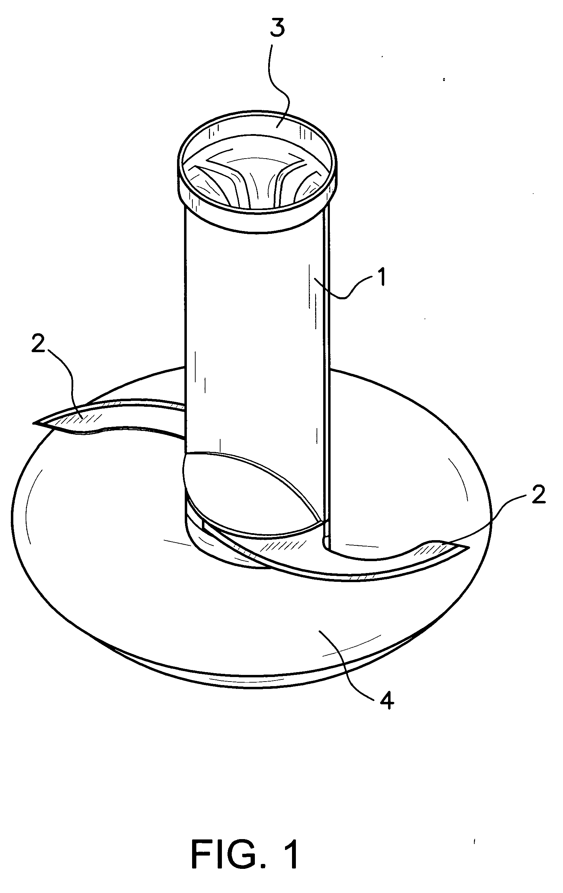

Figure 1 shows a central axis 1, blades 2 or paddles, a superior support or hook 3, and a base 4.

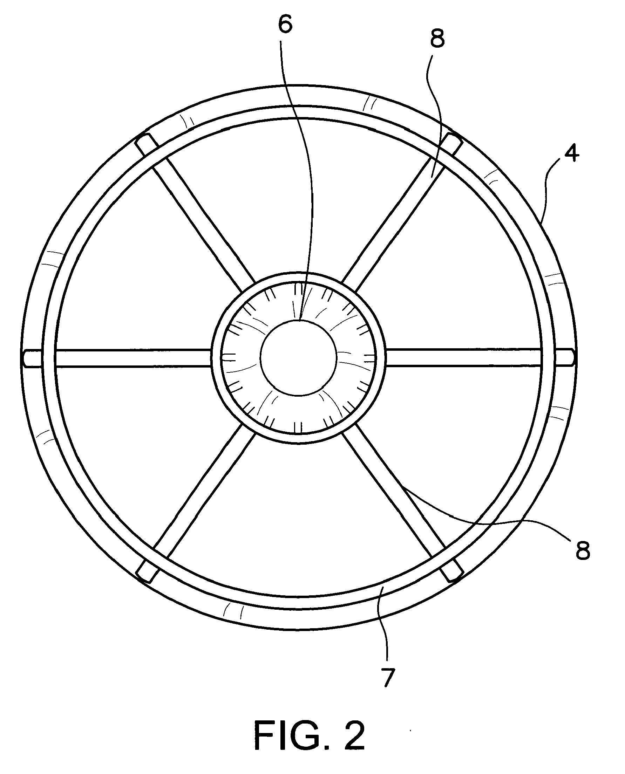

In figure 2 has been drawn the base 4, lateral flaps 7, radial ribbings 8 and a fixation cap 6.

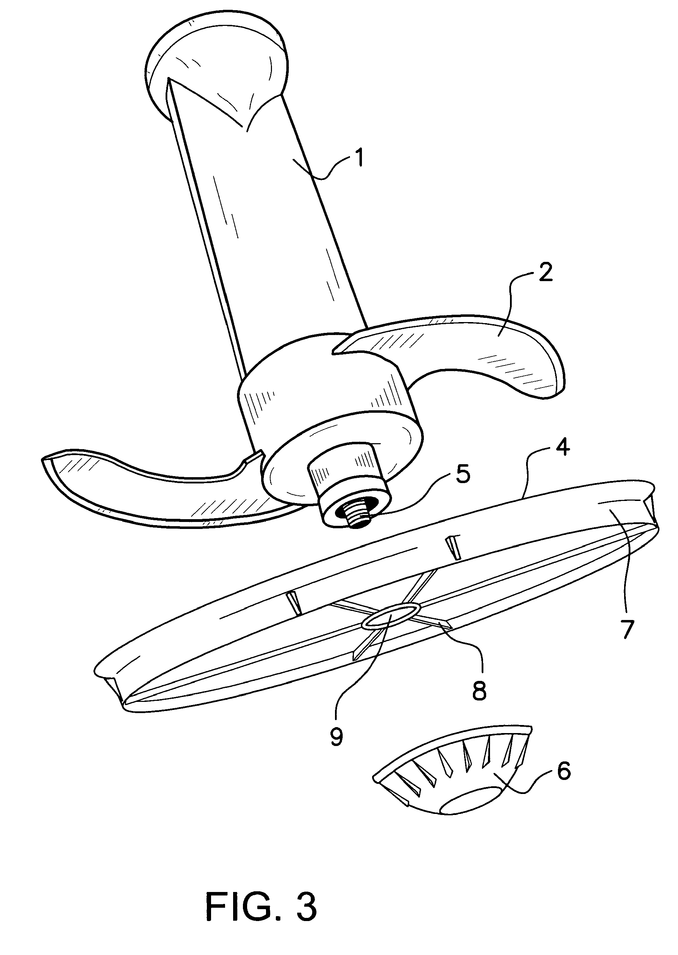

In figure 3 has been represented the referred base **4,** the central axis 1, the blades 2, a thread 5, the lateral flaps 7, the radial ribbings 8, an opening passage 9 and the fixation cap 6.

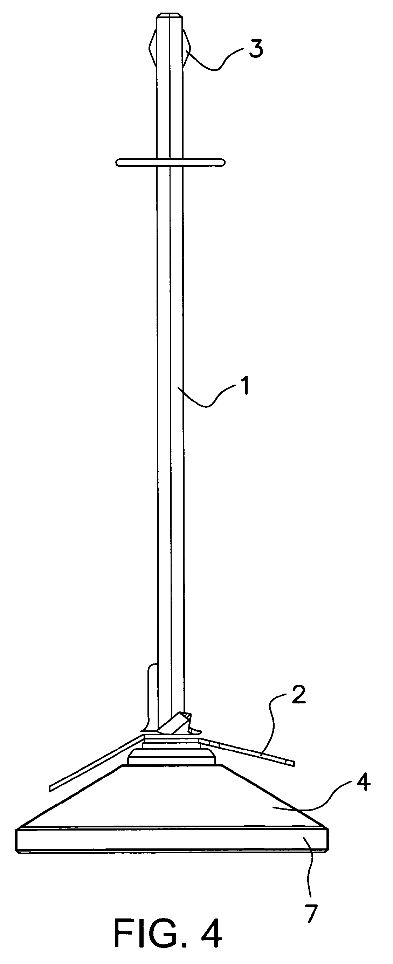

The central axis 1, the blades 2 or paddles, the superior support or hook 3, the base 4 and lateral flaps 7 have been illustrated in figure 4.

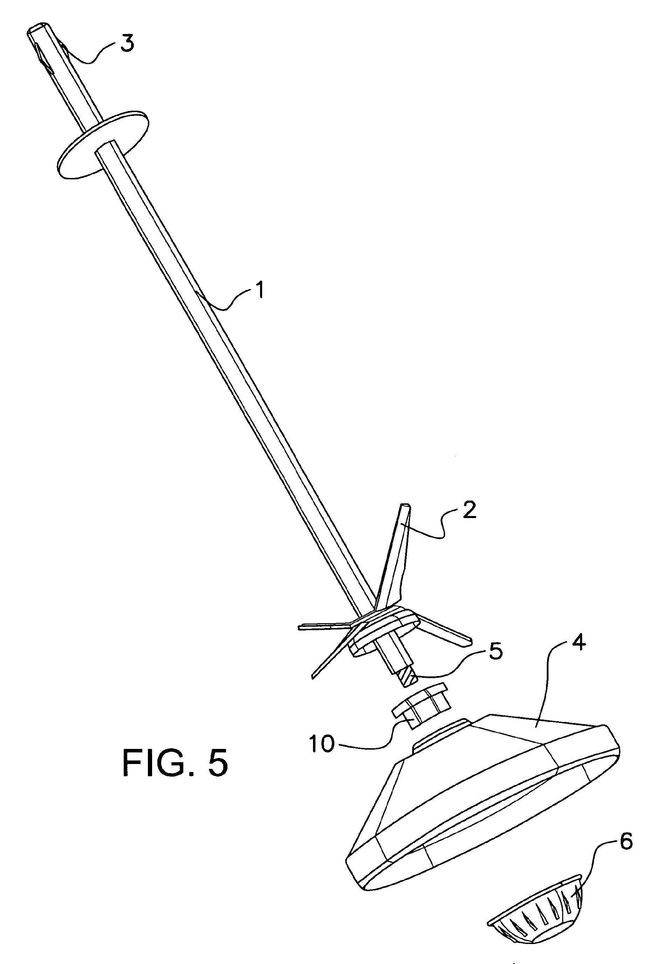

In figure 5 is shown the central axis 1, the lateral blades 2, the base 4, the flaps 7, the thread 6, a bearing 10 and the fixation cap 6.

Thus in a concrete embodiment, in the assembly phase, the thread 5, that belongs to the central axis 1, passes by the interior of the passage 9 of the base 4, in such a way that the thread 5, as lower prolongation of mentioned central axis 1, is introduced in the interior of the fixation cap 6 with a cast with screwthreads (not illustrated) for the threading of the mentioned thread 5.

The mentioned fixation means also can consist of at least a projection or clip means "click" (not illustrated in the drawings), placed in the lower end of the central axis 2 and that is joined by the pressure of a fixation cap 6 that has at least a housing adapted for the fit of said projection.

In the lower part of said base 4, that can have an identical or similar shape to the one of the bottom of the container where it is introduced, lateral flaps 7 are located, as a foot, and whose height of said flaps is equal or higher than the height of the fixation means. The purpose of the lateral flaps 7 is to avoid that the fixation cap 6 can touch the bottom of the container.

The container, to which the accessory will be introduced, will generally have more or less cylindrical shape, forming a bottom with circular appearance. This way, if the bottom has circular shape, the base will adopt this shape (figure 2) or one conical configuration (figure 4), having generally said base 4 a lower diameter to the one of the bottom of the container. In addition also radial ribbings 8 will be able to be included in the base 4, in such a way that they give firmness and resistance to said base. The height of said ribbings will be equal or lower to the one of the lateral flaps 7.

Thus when the accessory in the interior of the container is introduced and enters in operation, thanks to the base 4, can spin the central axis 1, with no need of an axis in the container. Once it has been finished, the accessory of the interior of the container is removed, and it is disassembled for its cleaning.

It is necessary to remark that that the container can be introduced in a microwaves oven, for example, because there is no metallic element, being in addition very easy to clean in a dishwasher.

The present patent describes a new accessory for hand blenders. The examples mentioned here are not limitatives of the present invention, for that reason it will be able to have different applications and/or be adapted, all of them within the scope of the following claims.

## Claims

1. Accessory for hand blender of the type that is fitted and used in the inner part of a container or watertight or hermetic container to cut or to mix food products, that comprises a spin central axis (1), with at least one blade (2) or paddle, fixed to the referred spin central axis and a superior support or hook (3) for the fit or the union to the power unit of hand blender **characterized in that** it forms an extractable set formed by an extractable base (4) fitted to the lower part of the central axis (1) by fixation means that allow the free turn or spin of the central axis with respect to the base.

2. Accessory in accordance to claim 1 **characterized in that** the referred base (4) has a shape identical or similar to the shape of the bottom of the container.

3. Accessory in accordance to claim 1 **characterized in that** the fixation means consist of a thread (5) as a lower extension of the mentioned central axis (1) and a fixation cap (6) with a cast with screwthreads for the threading of the mentioned thread (5).

4. -Accessory in accordance to claim 1 **characterized in that** the mentioned fixation means are at least a projection or clip system, incorporated in the lower end of the central axis (2) and that it is joined by the pressure to a fixation cap (6), that has at least a housing adapted for the fit of said projection, that is at least one.

5. Accessory in accordance to claim 1 or 3 or 4 **characterized in that** in the lower part of said base (4), lateral flaps (7) are located, as a foot, and whose height of said flaps is equal or higher than the height of the fixation means.

6. Accessory in accordance to claim 2 **characterized in that** the base (4) and the bottom of the container have circular shape.

7. Accessory in accordance to claim 5 and 6 **characterized in that** in said base (4), in addition, radial ribbings (8) are foreseen, equidistant, and whose (ribbings) height is equal or lower than to the one of the referred lateral flaps (7).

8. Accessory in accordance to claim 6 **characterized in that** the diameter of the base (4) is lower than the diameter of the bottom of the container.
